# EUROPÄISCHE PATENTSCHRIFT

(11) **EP 3 559 614 B1**
(45) Veröffentlichungstag und Bekanntmachung des Hinweises auf die Patenterteilung: **25.11.2020**
(21) Anmeldenummer: 17826201.0
(22) Anmeldetag: 18.12.2017
(51) Int. Cl.: G01G 19/02

(54) **AUFNEHMERANORDNUNG ZUM EINBAU IN EINE FAHRBAHN SOWIE VERFAHREN ZUM EINBAU DIESER AUFNEHMERANORDNUNG IN EINE FAHRBAHN**
TRANSDUCER ARRANGEMENT FOR IMPLEMENTATION INTO A ROAD SURFACE AND METHOD FOR IMPLEMENTING THE SAME INTO A ROAD SURFACE
ARRANGEMENT D'UN TRANSDUCTEUR À INCORPORER DANS UNE ROUTE ET PROCÉDÉ DE MONTAGE DANS LA ROUTE

(30) Priorität: 21.12.2016 EP 16205904
(43) Veröffentlichungstag der Anmeldung: 30.10.2019
(73) Patentinhaber: Kistler Holding AG, 8408 Winterthur ZH (CH)
(72) Erfinder: PFLUGER, Kim, 8404 Winterthur (CH)
(86) Internationale Anmeldenummer: PCT/EP2017/083347
(87) Internationale Veröffentlichungsnummer: WO 2018/114821

(56) Entgegenhaltungen:
- EP-A1- 0 654 654
- EP-A1- 0 892 259

## Beschreibung

### Technisches Gebiet

Die Erfindung betrifft eine Aufnehmeranordnung zum Einbau in eine Fahrbahn sowie ein Verfahren zum Einbau dieser Aufnehmeranordnung in eine Fahrbahn nach den Oberbegriffen der unabhängigen Ansprüche.

### Stand der Technik

Im Strassenverkehr fahren Fahrzeuge auf einer Fahrbahn. Um die Sicherheit im Strassenverkehr zu erhöhen und um Schäden der Fahrbahn zu minimieren, erfolgt eine Überwachung von Anzahl, Radlast, Achslast, Gesamtgewicht, Reifendruck der fahrenden Fahrzeuge. Häufig wird dazu eine Aufnehmeranordnung in die Fahrbahn eingebaut, um eine Gewichtskraft der fahrenden Fahrzeuge zu erfassen. Die Aufnehmeranordnung weist eine piezoelektrische Messanordnung auf. Jedes Mal, wenn ein Fahrzeug über die Aufnehmeranordnung fährt, erfasst die piezoelektrische Messanordnung eine vom fahrenden Fahrzeug verursachte Gewichtskraft. Das Erfassen der Gewichtskraft erfolgt dabei so rasch, dass die Fahrzeuge mit normaler Verkehrsgeschwindigkeit über die Aufnehmeranordnung fahren können. Die piezoelektrische Messanordnung gibt der Grösse der erfassten Gewichtskraft proportionale elektrische Signale ab, die an eine Auswerteeinheit weitergeleitet und dort ausgewertet werden.

Die Schrift EP0654654A1 zeigt eine Aufnehmeranordnung zum Einbau in eine Fahrbahn aus dem Stand der Technik. Die Aufnehmeranordnung wird in eine Nut im Belag der Fahrbahn gelegt und mit einer Einbettmasse vergossen. Die Nut ist so gross bemessen, dass die Aufnehmeranordnung darin vollständig Platz hat. Die Nut erstreckt sich unterhalb einer Ebene der Fahrbahn in einer Längsrichtung senkrecht oder gewinkelt zur Fahrtrichtung der fahrenden Fahrzeuge. Die Aufnehmeranordnung weist ein Hohlprofil mit einem Krafteinleitflansch, einem Rohrteil und einem Kraftverankerungsflansch auf. Krafteinleitflansch, Rohrteil und Kraftverankerungsflansch sind einstückig. Die piezoelektrische Messanordnung ist im Rohrteil angeordnet. Im eingebauten Zustand liegt der Krafteinleitflansch nahe der Fahrbahnebene und der Kraftverankerungsflansch liegt nahe an einem Grund der Nut. Das Rohrteil ist zwischen Krafteinleitflansch und Kraftverankerungsflansch angeordnet. Die zu erfassende Gewichtskraft der fahrenden Fahrzeuge ist lotrecht nach unten gerichtet und wirkt auf das Hohlprofil. Über den Krafteinleitflansch wird die zu erfassende Gewichtskraft in das Rohrteil und auf die piezoelektrische Messanordnung geleitet. Mit dem Kraftverankerungsflansch wird die Aufnehmeranordnung in der Einbettmasse verankert.

Die Aufnehmeranordnung weist zwei Isolierschaumteile, zwei Isoliermassen und eine Fahrbahnausgussmasse auf. Die zwei Isolierschaumteile sind an zwei Aussenseiten des Rohrteils angebracht. Die zwei Isoliermassen sind an zwei Aussenseiten des Krafteinleitflansches angebracht. Die Fahrbahnausgussmasse ist stoffschlüssig an einer Krafteinleitfläche des Krafteinleitflansches angebracht und ist zwischen den Isoliermassen angeordnet. Die Fahrbahnausgussmasse füllt einen oberen Raum zwischen Krafteinleitflansch und Fahrbahnebene aus. Obere Enden der Isoliermassen reichen bis zu einer oberen Seite der Fahrbahnausgussmasse. Die zwei Isolierschaumteile und die zwei Isoliermassen verhindern ein Einleiten von Rollkräften in das Hohlprofil. Die Gewichtskraft eines Fahrzeuges erzeugt eine Durchbiegung der Fahrbahn, was auch Deflektion genannt wird. Bei auf der Fahrbahn fahrenden Fahrzeugen äussert sich die Deflektion in Form von Rollkräften, die den fahrenden Fahrzeugen in Fahrtrichtung voraus- und nacheilen. Die Rollkräfte werden vom Belag der Fahrbahn und von der Einbettmasse zur Aufnehmeranordnung geleitet und verfälschen, wenn sie bis zur piezoelektrischen Messanordnung gelangen, das Erfassen der Gewichtskraft. Für ein genaues Erfassen der Gewichtskraft ist es daher notwendig, ein Einleiten der Rollkräfte in das Hohlprofil wirksam zu verhindern.

Zum Einbau in die Fahrbahn wird die Aufnehmeranordnung derart in der Nut positioniert, dass die obere Seite der Fahrbahnausgussmasse in der Ebene der Fahrbahn liegt. Daraufhin wird so viel Einbettmasse in die Nut gegossen, bis dass die Aufnehmeranordnung umgebende Seitenräume der Nut bis zur Ebene der Fahrbahn mit Einbettmasse gefüllt ist.

Nachteilig ist das durch die Fahrbahnausgussmasse bedingte hohe Gewicht der Aufnehmeranordnung, was den Transport zum Einbauort verteuert und den Einbau der Aufnehmeranordnung in die Fahrbahn erschwert. Auch ist der Einbau der Aufnehmeranordnung in eine Fahrbahn mit in Fahrtrichtung verlaufenden Spurrillen aufwändig, da die Fahrbahnausgussmasse in den Spurrillen bereichsweise aus der Fahrbahnebene vorsteht, welche vorstehenden Bereiche der Fahrbahnausgussmasse dann abgeschliffen werden müssen, was zeitaufwändig und teuer ist. Zudem kann die Aufnehmeranordnung bei Spurrillen die tiefer als die Fahrbahnausgussmasse hoch ist, nicht eingebaut werden, da dann nicht nur die Fahrbahnausgussmasse sondern auch der Krafteinleitflansch bereichsweise abgeschliffen werden müsste, was die Verfügbarkeit der Aufnehmeranordnung beeinträchtigen würde. Es ist sogar ratsam, die Fahrbahnausgussmasse nur auf eine minimale Höhe oberhalb des Krafteinleitflansches abzuschleifen, um den Krafteinleitflansch vor schädigenden Umwelteinflüssen wie Korrosion, usw. zu schützen. Schliesslich hat sich als nachteilig herausgestellt, dass sich die Fahrbahnausgussmasse vom Krafteinleitflansch infolge starker Krafteinwirkung, wie sie beim Bremsen von Fahrzeugen entstehen lösen kann, woraufhin die Aufnehmeranordnung die Gewichtskraft der auf der Fahrbahn fahrenden Fahrzeuge nicht mehr korrekt erfassen kann, was wiederum die Verfügbarkeit der Aufnehmeranordnung beeinträchtigt.

Eine erste Aufgabe der vorliegenden Erfindung ist es, eine Konstruktion der Aufnehmeranordnung zum Einbau in eine Fahrbahn aus dem Stand der Technik zu vereinfachen. Eine weitere Aufgabe der Erfindung besteht darin, den Transport der Aufnehmeranordnung zum Einbauort und den Einbau der Aufnehmeranordnung in die Fahrbahn kostengünstiger zu gestalten. Die Erfindung stellt sich als noch weitere Aufgabe, die Verfügbarkeit der Aufnehmeranordnung hoch zu halten. Eine diese Aufgaben lösende Aufnehmeranordnung soll dieselbe Genauigkeit beim Erfassen der Gewichtskraft von auf der Fahrbahn fahrenden Fahrzeugen haben, wie die Aufnehmeranordnung aus dem Stand der Technik.

### Darstellung der Erfindung

Zumindest eine dieser Aufgaben wird durch die Merkmale der unabhängigen Ansprüche gelöst.

Die Erfindung betrifft eine Aufnehmeranordnung zum Einbau in eine Fahrbahn; wobei die Aufnehmeranordnung ein Hohlprofil und eine piezoelektrische Messanordnung aufweist; wobei das Hohlprofil einen Hohlraum aufweist und die piezoelektrische Messanordnung im mechanischen Kontakt mit dem Hohlprofil im Hohlraum angeordnet ist; wobei das Hohlprofil eine aussenseitige Krafteinleitfläche aufweist und das Hohlprofil eine Gewichtskraft, welche an der Krafteinleitfläche angreift, auf die piezoelektrische Messanordnung leitet; wobei die piezoelektrische Messanordnung eine eingeleitete Gewichtskraft erfasst und einer Grösse der erfassten Gewichtskraft proportionale elektrische Signale abgibt; wobei die Aufnehmeranordnung ein Trennelement aufweist, welches Trennelement eine Rollkraft, welche Rollkraft am Trennelement angreift, nicht in das Hohlprofil leitet; und wobei das Trennelement mindestens eine Verteilöffnung aufweist, durch welche Verteilöffnung Einbettmasse fliessen kann.

Die Erfindung betrifft auch ein Verfahren zum Einbau einer Aufnehmeranordnung in eine Fahrbahn; wobei die Aufnehmeranordnung ein Hohlprofil und eine piezoelektrische Messanordnung aufweist; wobei das Hohlprofil einen Hohlraum aufweist und die piezoelektrische Messanordnung im mechanischen Kontakt mit dem Hohlprofil im Hohlraum angeordnet ist; wobei das Hohlprofil eine aussenseitige Krafteinleitfläche aufweist und das Hohlprofil eine Gewichtskraft, welche an der Krafteinleitfläche angreift, auf die piezoelektrische Messanordnung leitet; wobei die piezoelektrische Messanordnung eine eingeleitete Gewichtskraft erfasst und einer Grösse der erfassten Gewichtskraft proportionale elektrische Signale abgibt; wobei in einem Belag der Fahrbahn eine Nut angelegt wird, die so gross bemessen ist, dass die Aufnehmeranordnung darin vollständig Platz hat und um die Aufnehmeranordnung Raum für Einbettmasse ist; wobei die Aufnehmeranordnung in der Nut gelegt wird; wobei Einbettmasse in den Raum für Einbettmasse gegossen wird; wobei die Aufnehmeranordnung ein Trennelement aufweist, welches Trennelement eine Rollkraft, welche Rollkraft am Trennelement angreift, nicht in das Hohlprofil leitet, und welches Trennelement mindestens eine Verteilöffnung aufweist; und wobei Einbettmasse durch die Verteilöffnung fliesst und sich im Raum für Einbettmasse verteilt.

Im ersten Vergleich mit der Aufnehmeranordnung aus dem Stand der Technik weist die erfindungsgemässe Aufnehmeranordnung keine Fahrbahnausgussmasse mehr auf. Dadurch, dass das Trennelement mindestens eine Verteilöffnung aufweist, kann sich die Einbettmasse beim Einfüllen in die Nut auf einfache Weise im Raum für Einbettmasse um die Aufnehmeranordnung verteilen. Die Fahrbahnausgussmasse wird also nicht mehr benötigt, was die Anzahl der Bauteile der Aufnehmeranordnung verringert. Dies erleichtert und beschleunigt den Zusammenbau der Aufnehmeranordnung und erniedrigt auch das Gewicht der fertig zusammengebauten Aufnehmeranordnung, wodurch sich dann auch der Transport der Aufnehmeranordnung zum Einbauort vergünstigt. Schliesslich lässt sich die Aufnehmeranordnung ohne Fahrbahnausgussmasse flexibler in die Fahrbahn einbauen. Die Einbettmasse kann sich beim Einfüllen in die Nut dem lokalen Verlauf der Fahrbahnebene flexibel anpassen. Beim Vorhandensein von Spurrillen ist ein Abschleifen von aus der Fahrbahnebene vorstehenden Bereichen der Fahrbahnausgussmasse somit nicht mehr nötig, was Zeit und Aufwand spart. Zudem kann die Aufnehmeranordnung auch bei tiefen Spurrillen in die Fahrbahn eingebaut werden, durch den Wegfall der Fahrbahnausgussmasse ist die Höhe der Fahrbahnausgussmasse kein limitierender Faktor mehr.

Die im erfindungsgemässen Verfahren in die Fahrbahn eingebaute Aufnehmeranordnung weist ausgehärtete Einbettmasse in einem oberen Raum zwischen der Krafteinleitfläche und der Fahrbahnebene auf, sie weist ausgehärtete Einbettmasse in mindestens einen Seitenraum zwischen dem Trennelement und einer Seitenfläche der Nut auf, und sie weist ausgehärtete Einbettmasse in der Verteilöffnung; wobei im oberen Raum ausgehärtete Einbettmasse mit der Krafteinleitfläche stoffschlüssig verbunden ist; und wobei die ausgehärtete Einbettmasse in der Verteilöffnung die ausgehärtete Einbettmasse im oberen Raum mit der ausgehärteten Einbettmasse im Seitenraum einstückig verbindet.

Im weiteren Vergleich mit der Aufnehmeranordnung aus dem Stand der Technik lässt sich Aufnehmeranordnung somit im erfinderischen Verfahren derart in die Fahrbahn einbauen, dass ausgehärtete Einbettmasse im oberen Raum nicht nur mit der Krafteinleitfläche stoffschlüssig verbunden ist, sondern auch mit ausgehärteter Einbettmasse im Seitenraum einstückig verbunden. Somit ist die ausgehärtete Einbettmasse im oberen Raum vergleichsweise besser befestigt, und kann sich auch unter grosser Krafteinwirkung nicht mehr lösen, was die Verfügbarkeit der Aufnehmeranordnung hoch hält.

### Kurze Beschreibung der Zeichnungen

Im Folgenden wird die Erfindung beispielhaft unter Beizug der Figuren näher erklärt. Es zeigen
- Fig. 1: eine Ansicht eines Teils einer ersten Ausführungsform einer Aufnehmeranordnung zum Einbau in eine Fahrbahn;
- Fig. 2: eine Ansicht eines Teils einer zweiten Ausführungsform einer Aufnehmeranordnung zum Einbau in eine Fahrbahn;
- Fig. 3: eine Ansicht eines Teils der Fahrbahn mit einer Nut für die Aufnehmeranordnung nach Fig. 1 oder 2;
- Fig. 4: eine Ansicht eines Teils der Fahrbahn mit der Nut nach Fig. 3 nach dem Füllen des Grundes der Nut mit Einbettmasse;
- Fig. 5: eine Ansicht eines Teils der Fahrbahn mit der Nut nach Fig. 4 nach dem Positionieren der ersten Ausführungsform einer Aufnehmeranordnung nach Fig. 1 in der Nut;
- Fig. 6: eine Ansicht eines Teils der Fahrbahn mit der Nut nach Fig. 4 nach dem Positionieren der zweiten Ausführungsform einer Aufnehmeranordnung nach Fig. 2 in der Nut;
- Fig. 7: eine Ansicht eines Teils der Fahrbahn mit der in der Nut positionierten ersten Ausführungsform einer Aufnehmeranordnung nach Fig. 5 nach dem vollständigen Füllen mit Einbettmasse; und
- Fig. 8: eine Ansicht eines Teils der Fahrbahn mit der in der Nut positionierten zweiten Ausführungsform einer Aufnehmeranordnung nach Fig. 6 nach dem vollständigen Füllen mit Einbettmasse.

### Wege zur Ausführung der Erfindung

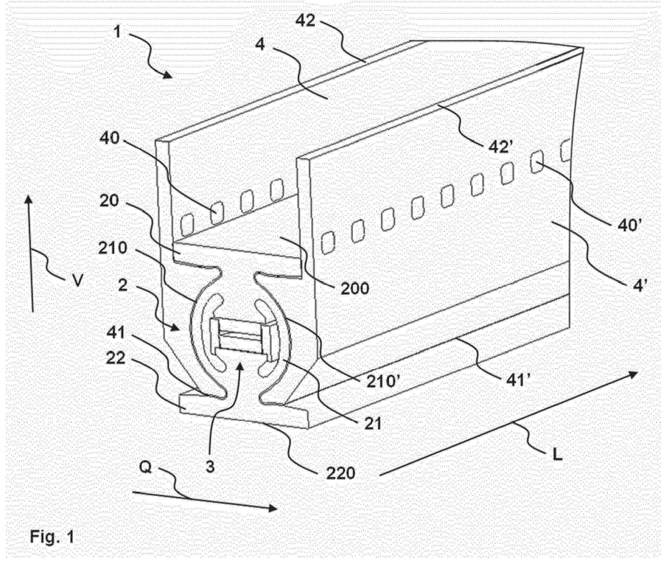

Die Fig. 1, 2, 5 bis 8 zeigen zwei bevorzugte Ausführungsformen einer erfindungsgemässen Aufnehmeranordnung 1 vor und nach dem Einbau in eine Fahrbahn. Die Aufnehmeranordnung 1 weist eine Ausdehnung in Längsrichtung L, Querrichtung Q und Vertikalrichtung V auf. Die drei Richtungen stehen senkrecht aufeinander. Eine Ausdehnung der Aufnehmeranordnung 1 entlang der Längsrichtung L ist wesentlich grösser als entlang der Querrichtung Q und entlang der Vertikalrichtung V. Vorzugsweise weist die Aufnehmeranordnung in Längsrichtung L eine Länge von 1000mm oder mehr auf, während sie in Querrichtung Q eine Breite von rund 30mm bis 50mm und in Vertikalrichtung eine Höhe von 20mm bis 70mm aufweist. Die Längsrichtung L und die Querrichtung Q spannen eine Längsebene auf. Die Vertikalrichtung V und die Längsrichtung L spannen eine Vertikalebene auf. Die Querrichtung Q und die Vertikalrichtung V spannen eine Querebene auf.

Die Aufnehmeranordnung 1 weist ein Hohlprofil 2, eine piezoelektrische Messanordnung 3 und mindestens ein Trennelement 4, 4', 4" auf.

Das Hohlprofil 2 weist einen Krafteinleitflansch 20, ein Rohrteil 21 und einen Kraftverankerungsflansch 22 auf. Das Hohlprofil 21 besteht aus mechanisch beständigem Material wie aus Reinmetallen, Aluminiumlegierungen, Nickellegierungen, Kobaltlegierungen, Eisenlegierungen, usw. In einem Schnitt in der Querebene gesehen, sind Krafteinleitflansch 20 und Kraftverankerungsflansch 22 T-förmig. In einem Schnitt in der Querebene gesehen, ist das Rohrteil 21 rund. Vorzugsweise ist das Hohlprofil 2 spiegelsymmetrisch für eine im Zentrum des Hohlprofils 2 platzierten Vertikalebene. Vorzugsweise sind Krafteinleitflansch 20, Rohrteil 21 und Kraftverankerungsflansch 22 einstückig.

Das Rohrteil 21 ist zwischen Krafteinleitflansch 20 und Kraftverankerungsflansch 22 angeordnet. Ein Zentrum des Hohlprofils 2 fällt mit dem Zentrum des Rohrteils 21 zusammen. Mit dem Zentrum ist ein geometrisches Zentrum gemeint.

Krafteinleitflansch 20 und Kraftverankerungsflansch 22 sind massiv und sehr steif ausgelegt. Eine zu erfassende Gewichtskraft von fahrenden Fahrzeugen wirkt entgegen der Vertikalrichtung V auf die Krafteinleitfläche 200. Über den Krafteinleitflansch 20 wird die zu erfassende Gewichtskraft entgegen der Vertikalrichtung V in das Rohrteil 21 geleitet. Über die Verankerung 220 wird das Hohlprofil 2 in einer Einbettmasse in einer Nut der Fahrbahn verankert.

Der Krafteinleitflansch 20 weist eine Krafteinleitfläche 200 auf. Die Krafteinleitfläche 200 ist bezüglich des Zentrums aussenseitig am Krafteinleitflansch 20 und erstreckt sich in der Längsebene. Im eingebauten Zustand liegt der Krafteinleitflansch 20 nahe unterhalb einer Fahrbahnebene. Eine nahe Lage der Krafteinleitfläche 200 unterhalb der Fahrbahnebene meint eine kürzeste Entfernung zwischen Krafteinleitfläche 200 und Fahrbahnebene von weniger als 20mm, vorzugsweise weniger als 10mm. Der Krafteinleitflansch 20 beginnt mit der Krafteinleitfläche 200 und endet in einem Übergangsbereich zum Rohrteil 21.

Der Kraftverankerungsflansch 22 beginnt in einem Übergangsbereich zum Rohrteil 21 und endet in einer Verankerung 220. Die Verankerung 220 ist plattenförmig und erstreckt sich in der Längsebene. Im eingebauten Zustand liegt der Kraftverankerungsflansch 22 nahe oberhalb eines Grundes der Nut. Eine nahe Lage vom Kraftverankerungsflansch 22 oberhalb vom Grund der Nut meint eine kürzeste Entfernung zwischen Kraftverankerungsflansch 22 und Grund von weniger als 20mm, vorzugsweise weniger als 10mm.

Die piezoelektrische Messanordnung 3 ist im Zentrum des Rohrteils 21 angeordnet. Die piezoelektrische Messanordnung 3 weist mehrere piezoelektrische Elemente auf. Die piezoelektrischen Elemente sind scheibenförmig und bestehen aus piezoelektrischem Kristallmaterial wie Quarz (SiO₂ Einkristall), Calcium-Gallo-Germanat (Ca₃Ga₂Ge₄O₁₄ oder CGG), Langasit (La₃Ga₅SiO₁₄ oder LGS), Turmalin, Galliumorthophosphat, Piezokeramik, usw. Die piezoelektrischen Elemente sind kristallographisch so orientiert geschnitten, dass sie eine hohe Empfindlichkeit für die zu erfassende Gewichtskraft haben. Vorzugsweise sind die piezoelektrischen Elemente so orientiert, dass auf den gleichen Oberflächen auf denen die Gewichtskraft entgegen der Vertikalrichtung V einwirkt, auch negative und positive elektrischer Polarisationsladungen erzeugt werden. Eine Anzahl der elektrischen Polarisationsladungen ist proportional zur Grösse der erfassten Gewichtskraft. Die elektrischen Polarisationsladungen werden von Elektroden als elektrische Signale abgegriffen und über elektrische Leiter an eine figürlich nicht dargestellte Auswerteeinheit weitergeleitet und ausgewertet.

Vorzugsweise weist die piezoelektrische Messanordnung 3 mehrere im gegenseitigen Abstand von 50mm bis 100mm entlang der Längsachse L auf einem Lineal angeordnete piezoelektrische Elemente auf. Das Lineal mit den piezoelektrischen Elementen wird in einen zentralen Hohlraum des Rohrteils 21 geschoben. Die piezoelektrische Messanordnung 3 hat gegenüber dem Hohlraum ein leichtes Untermass in Vertikalrichtung V. Das Rohrteil 21 ist dünnwandig und elastisch ausgelegt. Das Rohrteil 21 lässt sich somit durch seitliches Pressen in und entgegen der Querrichtung Q in Vertikalrichtung V aufbiegen und das Lineal wird mit den piezoelektrischen Elementen in Längsrichtung L in den Hohlraum geschoben. Nachdem das seitliche Pressen beendet ist, wird die piezoelektrische Messanordnung 3 unter einer mechanischen Vorspannung im Hohlraum gehalten. Die mechanische Vorspannung erfolgt in und entgegen der Vertikalrichtung V. Die piezoelektrische Messanordnung 3 ist somit im mechanischen Kontakt mit dem Hohlprofil 2. Ein Kraftnebenschluss über die dünnen Wände des Rohrteils 21 ist klein. Ein Grossteil der zu erfassenden Gewichtskraft wird vom Krafteinleitflansch 20 in die piezoelektrische Messanordnung 3 im zentralen Hohlraum des Rohrteils 21 geleitet.

Das Trennelement 4, 4', 4" besteht aus Material mit geringem Kompressionsmodul und niedrigem Elastizitätsmodul wie Silikonschaum, Kautschuk, Expandiertes Polypropylen (EPP), Ethylen-Propylen-Dien-Kautschuk (EPDM), usw. Vorzugsweise weist das Trennelement 4, 4', 4" in Längsrichtung L die gleiche Länge wie das Hohlprofil 2 auf.

In der ersten Ausführungsform einer Aufnehmeranordnung 1 nach Fig. 1 ist das Trennelement 4, 4' an mindestens einer Befestigungsfläche 210, 210' des Hohlprofils 2 befestigt. Die Befestigungsfläche 210, 210' ist bezüglich des Zentrums aussenseitig und erstreckt sich in der Vertikalebene. Die Befestigungsfläche 210, 210' erstreckt sich von der Krafteinleitfläche 200 bis zur Verankerung 220. Das Trennelement 4, 4' erstreckt sich in der Vertikalebene. Vorzugsweise bedeckt das Trennelement 4, 4' die Befestigungsfläche 210, 210'. Die Befestigung vom Trennelement 4, 4' am Hohlprofil 2 erfolgt über Formschluss und/oder Kraftschluss und/oder Stoffschluss. Vorzugsweise ist das Trennelement 4, 4' auf die Befestigungsfläche 210, 210' gesteckt.

In der ersten Ausführungsform einer Aufnehmeranordnung 1 nach Fig. 1 sind vorzugsweise zwei Trennelemente 4, 4' an zwei Befestigungsflächen 210, 210' befestigt. Ein erstes Trennelement 4 ist an einer ersten Befestigungsfläche 210 befestigt. Ein zweites Trennelement 4' ist an einer zweiten Befestigungsfläche 210' befestigt. Im eingebauten Zustand ist das erste Trennelement 4 in Fahrtrichtung gesehen vor dem Hohlprofil 2 angeordnet und das zweite Trennelement 4' ist in Fahrtrichtung gesehen nach dem Hohlprofil 2 angeordnet. Die Fahrtrichtung entspricht der Querrichtung Q. Vorzugsweise sind die beiden Trennelemente 4, 4' spiegelsymmetrisch für eine im Zentrum des Hohlprofils 2 platzierte Vertikalebene. Ein Abstand in Fahrrichtung zwischen den beiden Trennelementen 4, 4' ist konstant.

In der ersten Ausführungsform einer Aufnehmeranordnung 1 nach Fig. 1 weist das Trennelement 4, 4' mindestens ein unteres Ende 41, 41' auf. Das untere Ende 41, 41' begrenzt das Trennelement 4, 4' in der Vertikalebene. Das untere Ende 41, 41' liegt in Vertikalrichtung V im Übergangsbereich vom Rohrteil 21 mit dem Kraftverankerungsflansch 22. Das untere Ende 41, 41' verläuft in Längsrichtung L weitgehend parallel zur Verankerung 220.

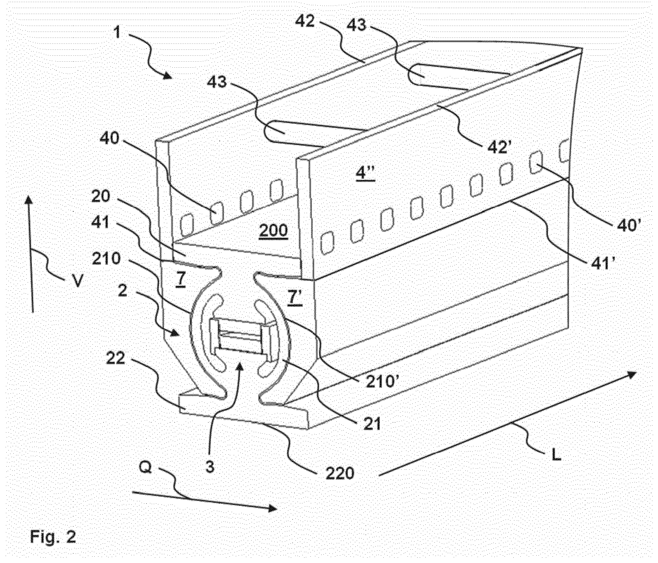

In der zweiten Ausführungsform einer Aufnehmeranordnung 1 nach Fig. 2 ist das Trennelement 4" am Krafteinleitflansch 200 befestigt. Vorzugsweise ist das Trennelement 4" bezüglich des Zentrums aussenseitig am Krafteinleitflansch 200 befestigt. Das Trennelement 4" erstreckt sich in der Vertikalebene. Vorzugsweise bedeckt das Trennelement 4" Seitenflächen des Krafteinleitflanschs 200, welche Seitenflächen sind in der Vertikalebene erstrecken. Vorzugsweise bedeckt das Trennelement 4" die Seitenflächen des Krafteinleitflanschs 200 vollständig. Die Befestigung vom Trennelement 4" am Krafteinleitflansch 200 erfolgt über Formschluss und/oder Kraftschluss und/oder Stoffschluss. Vorzugsweise ist das Trennelement 4" auf den Krafteinleitflansch 200 gesteckt.

In der zweiten Ausführungsform einer Aufnehmeranordnung 1 nach Fig. 2 weist das Trennelement 4" mindestens ein unteres Ende 41, 41' auf, welches untere Ende 41, 41' das Trennelement 4" in der Vertikalebene begrenzt. Das Trennelement 4" ist mit einem ersten unteren Ende 41 am Krafteinleitungsflansch 200 in Fahrtrichtung gesehen vor dem Hohlprofil 2 befestigt. Das Trennelement 4" ist mit einem zweiten unteren Ende 41' am Krafteinleitungsflansch 200 in Fahrtrichtung gesehen nach dem Hohlprofil 2 befestigt. Die Fahrtrichtung entspricht der Querrichtung Q. Vorzugsweise sind die beiden unteren Enden 41, 41' des Trennelements 4" spiegelsymmetrisch für eine im Zentrum des Hohlprofils 2 platzierte Vertikalebene. Ein Abstand in Fahrrichtung zwischen den beiden unteren Enden 41, 41' des Trennelements 4" ist konstant.

In der zweiten Ausführungsform einer Aufnehmeranordnung 1 nach Fig. 2 ist das Trennelement 4" vorzugsweise einstückig, der Bereich vom Trennelement 4" mit dem ersten unteren Ende 41 ist über mindestens ein Abstandselement 43 mechanisch mit dem Bereich vom Trennelement 4" mit dem zweiten unteren Ende 41' verbunden. Das Abstandselement 43 ist vorzugsweise stegförmig. Mehrere Abstandselemente 43 sind in Fahrtrichtung gesehen zwischen dem Bereich vom Trennelement 4" mit dem ersten unteren Ende 41 und dem Bereich vom Trennelement 4" mit dem zweiten unteren Ende 41' angeordnet. Das Abstandselement 43 hält den Bereich vom Trennelement 4" mit dem ersten unteren Ende 41 und den Bereich vom Trennelement 4" mit dem zweiten unteren Ende 41' in Fahrtrichtung gesehen im konstanten Abstand zueinander.

Die zweite Ausführungsform einer Aufnehmeranordnung 1 nach Fig. 2 weist mindestens ein Isolierschaumteil 7, 7' auf. Das Isolierschaumteil 7, 7' besteht wie das Trennelement 4, 4', 4" aus Material mit geringem Kompressionsmodul und niedrigem Elastizitätsmodul wie Silikonschaum, Kautschuk, Expandiertes Polypropylen (EPP), Ethylen-Propylen-Dien-Kautschuk (EPDM), usw. Vorzugsweise weist das Isolierschaumteil 7, 7' in Längsrichtung L die gleiche Länge wie das Hohlprofil 2 auf. Auch weist das Hohlprofil 2 mindestens eine aussenseitige Befestigungsfläche 210, 210' auf. Ein erstes Isolierschaumteil 7 ist an einer ersten Befestigungsfläche 210 befestigt, ein zweites Isolierschaumteil 7' ist an einer zweiten Befestigungsfläche 210' befestigt. Im eingebauten Zustand ist das erste Isolierschaumteil 7 in Fahrtrichtung gesehen vor dem Hohlprofil 2 angeordnet und das zweite Isolierschaumteil 7' ist in Fahrtrichtung gesehen nach dem Hohlprofil 2 angeordnet. Die Fahrtrichtung entspricht der Querrichtung Q. Vorzugsweise sind die beiden Isolierschaumteile 7, 7' spiegelsymmetrisch für eine im Zentrum des Hohlprofils 2 platzierte Vertikalebene. Ein Abstand in Fahrrichtung zwischen den beiden Isolierschaumteilen 7, 7' ist konstant. Das Trennelement 4" grenzt mit dem ersten unteren Ende 41 an das erste Isolierschaumteil 7, und das Trennelement 4" grenzt mit dem zweiten unteren Ende 41' an das zweite Isolierschaumteil 7'. Vorzugsweise liegt das erste untere Ende 41 vom Trennelement 4" bündig am ersten Isolierschaumteil 7 an, und das zweite untere Ende 41' vom Trennelement 4" liegt bündig am zweiten Isolierschaumteil 7' an.

Rollkräfte entstehen bei der Deflektion der Fahrbahn unter der Gewichtskraft der auf der Fahrbahn fahrenden Fahrzeuge. Die Rollkräfte breiten sich in Fahrtrichtung aus, sie eilen den fahrenden Fahrzeugen in Fahrtrichtung voraus und sie eilen den Fahrzeugen nach. Eine Grösse der Rollkräfte nimmt unterhalb der Fahrbahn mit steigendem Abstand zur Fahrbahnebene ab. Aufgrund des geringen Kompressionsmoduls und des niedrigen Elastizitätsmoduls des Trennelements 4, 4', 4" verformt sich das Trennelement 4, 4', 4" unter der Wirkung der Rollkräfte und die sich ausbreitenden Rollkräfte werden nicht in das Hohlprofil 2 eingeleitet. Man spricht auch von einer Rollkraftentkoppelung. Ein Einleiten der Rollkräfte in das Hohlprofil 2 wird so durch das Trennelement 4, 4', 4" wirksam verhindert.

Das Trennelement 4, 4', 4" weist mindestens eine Verteilöffnung 40, 40' auf, durch welche Verteilöffnung 40, 40' Einbettmasse fliessen kann. In den Ausführungsformen nach Fig. 1 und 2 sind mehrere runde Verteilöffnungen 40, 40' im Trennelement 4, 4', 4" angebracht. Bei Kenntnis der vorliegenden Erfindung kann die Verteilöffnung auch ein Langloch, ein länglicher Schlitz, ein Polygon, usw. sein.

Das Trennelement 4, 4', 4" weist mindestens ein oberes Ende 42, 42' auf. Das obere Ende 42, 42' begrenzt das Trennelement 4, 4', 4" in der Vertikalebene. Das obere Ende 42, 42' liegt in Vertikalrichtung V oberhalb der Krafteinleitfläche 200. Das Trennelement 4, 4', 4" ist mit einem ersten oberen Ende 42 in Fahrtrichtung gesehen vor dem Hohlprofil 2 oberhalb der Krafteinleitfläche 200 begrenzt. Das Trennelement 4, 4', 4" ist mit einem zweiten oberen Ende 42' in Fahrtrichtung gesehen nach dem Hohlprofil 2 oberhalb der Krafteinleitfläche 200 begrenzt. Das obere Ende 42, 42' verläuft in Längsrichtung L weitgehend parallel zur Krafteinleitfläche 200. Die Verteilöffnung 40, 40' ist zwischen dem unteren Ende 41, 41' und dem oberen Ende 42, 42' angeordnet. Vorzugsweise sind mehrere Verteilöffnungen 40, 40' in einer Reihe im Trennelement 4, 4', 4" angeordnet. Vorzugsweise ist die Verteilöffnung 40, 40 mittig zwischen dem unteren Ende 41, 41' und dem oberen Ende 42, 42' angeordnet. Vorzugsweise ist die Verteilöffnung 40, 40 nahe der Krafteinleitfläche 200 angeordnet. Eine nahe Anordnung der Verteilöffnung 40, 40 zur Krafteinleitfläche 200 meint eine kürzeste Entfernung von einem Rand der Verteilöffnung 40, 40 zu einem Rand der Krafteinleitfläche 200 von weniger als 20mm, vorzugsweise weniger als 10mm.

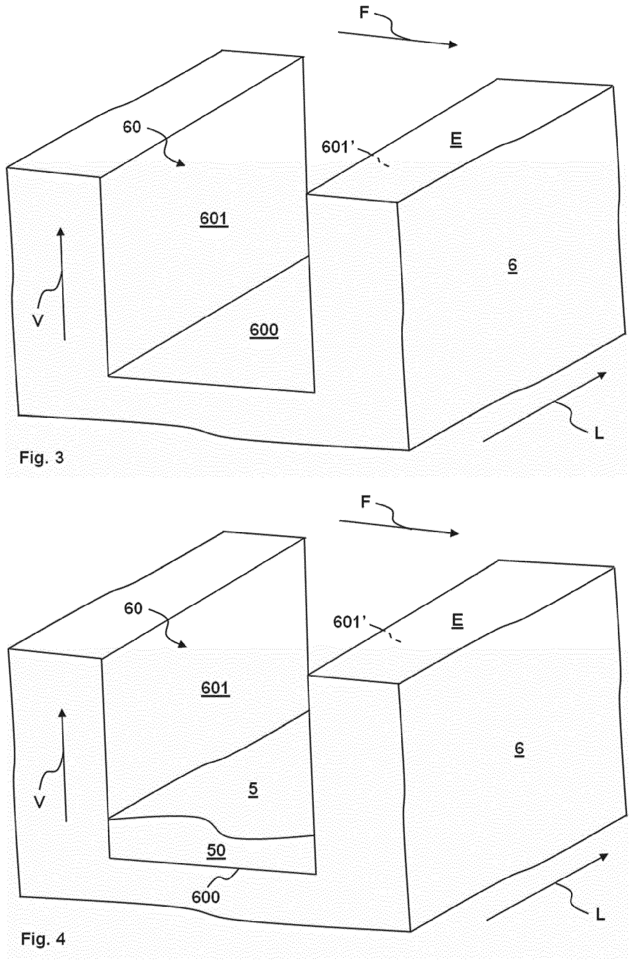

Die Fig. 3 bis 8 zeigen Ansicht eines Teils einer Fahrbahn, auf welcher figürlich nicht dargestellte Fahrzeuge fahren. Die Fahrzeuge fahren in oder entgegen einer Fahrtrichtung F auf der Fahrbahn. Die Fahrtrichtung F ist gleich der Querrichtung Q der Aufnehmeranordnung 1 aus Fig. 1 oder 2. Eine Oberfläche der Fahrbahn wird Fahrbahnebene E genannt. Die Fahrbahnebene E ist parallel zur Längsebene der Aufnehmeranordnung 1 aus Fig. 1 oder 2. Die Fahrbahn weist einen Belag 6 auf. Der Belag 6 besteht aus mechanisch beständigem Material wie Asphalt, Beton, usw.

In einem ersten Verfahrensschritt zum Einbau der Aufnehmeranordnung 1 in die Fahrbahn, wird in der Fahrbahn eine Nut 60 angelegt. Fig. 3 zeigt die in der Fahrbahn angelegte Nut 60. Die Nut 60 wird mit einem geeigneten Werkzeug wie eine Fräse hergestellt. Die Nut 60 erstreckt sich unterhalb der Fahrbahnebene E. Die Nut 60 verläuft senkrecht oder gewinkelt zur Fahrtrichtung F. In der Ausführungsform einer Nut 60 nach Fig. 3 bis 8 verläuft die Nut 60 senkrecht zur Fahrtrichtung F entlang einer Längsrichtung L. Die Längsrichtung L der Nut 60 ist gleich der Längsrichtung L der Aufnehmeranordnung 1. Die Nut 60 ist so gross bemessen, dass die Aufnehmeranordnung 1 darin vollständig Platz hat und dass um die Aufnehmeranordnung 1 Raum für Einbettmasse 5 ist. Vorzugsweise hat die Nut 60 in der Vertikalebene einen rechteckigen Querschnitt. Die Nut 60 weist einen Grund 600 auf, welcher sich in der Längsebene erstreckt. Die Nut 60 weist zwei Seitenflächen 601, 601' auf, welche sich jeweils in einer Vertikalebene erstrecken. Die Vertikalebene der Nut 60 ist parallel zur Vertikalebene der Aufnehmeranordnung 1.

In einem zweiten Verfahrensschritt zum Einbau der Aufnehmeranordnung 1 in die Fahrbahn wird die leere Nut 60 teilweise mit Einbettmasse 5 gefüllt. Die Einbettmasse 5 besteht aus mechanisch beständigem, aushärtbarem Material wie Polyesterharz, Epoxidharz, usw. Eine solche Einbettmasse 5 wird von der Anmelderin unter der Typenbezeichnungen 1000A1, 1000A3 kommerziell vertrieben. Die Einbettmasse 5 wird im viskosen Zustand in die Nut 60 gefüllt und härtet temperaturabhängig in weniger als 1h bis 2h aus. Die Einbettmasse 5 geht beim Aushärten mit dem Grund 600 und den Seitenflächen 601, 601' eine stoffschlüssige Verbindung ein. Fig. 4 zeigt die teilweise mit Einbettmasse 5 gefüllte Nut 60. Die Einbettmasse 5 füllt einen unteren Raum 50 der Nut 60. Der untere Raum 50 umfasst den Grund 600 selber sowie grundnahe Bereiche der Seitenflächen 601, 601'. Der Grund 600 selber sowie grundnahe Bereiche der Seitenflächen 601, 601' sind vollständig mit Einbettmasse 5 bedeckt. Der untere Raum 50 macht vorzugsweise 25% bis 50% der Nut 60 aus.

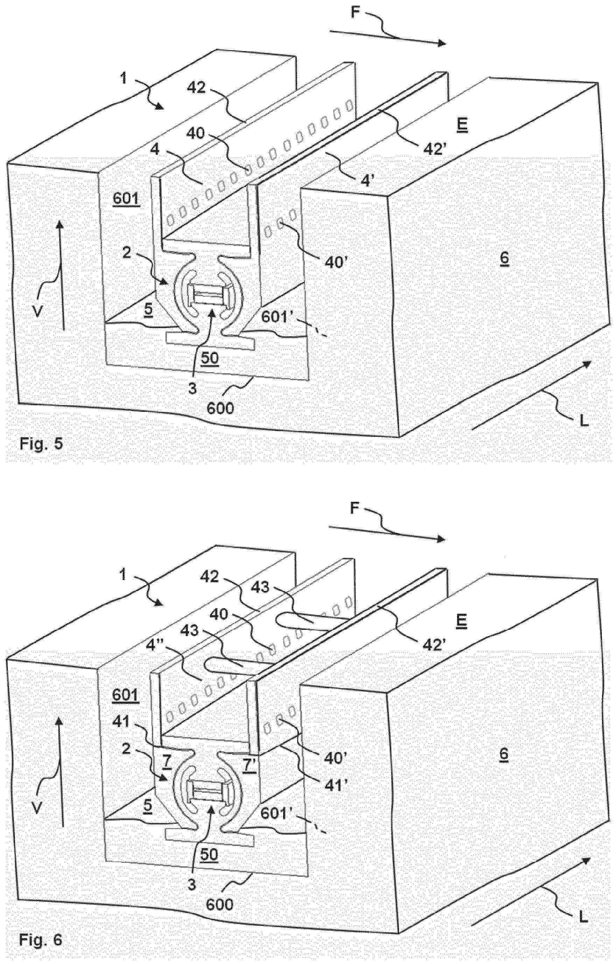

In einem weiteren Verfahrensschritt zum Einbau der Aufnehmeranordnung 1 wird die Aufnehmeranordnung 1 in die Nut 60 gelegt und in der Nut 60 positioniert. Fig. 5 zeigt die in die teilweise mit Einbettmasse 5 gefüllten Nut 60 gelegte Aufnehmeranordnung 1 der ersten Ausführungsform nach Fig. 1. Fig. 6 zeigt die in die teilweise mit Einbettmasse 5 gefüllten Nut 60 gelegte Aufnehmeranordnung 1 der zweiten Ausführungsform nach Fig. 2. Vorzugsweise wird die Aufnehmeranordnung 1 mit dem Kraftverankerungsflansch 22 derart in der Einbettmasse 5 positioniert, dass der Kraftverankerungsflansch 22 von Einbettmasse 5 umgeben ist. Der Raum für Einbettmasse 5 in der Nut 60 umfasst den unteren Raum 50, einen oberen Raum 51 und mindestens einen Seitenraum 52, 52'. Der obere Raum 51 liegt zwischen der Krafteinleitfläche 200 und der Fahrbahnebene E. Der Seitenraum 52, 52' liegt zwischen dem Trennelement 4, 4', 4" und einer Seitenfläche 601, 601'.

Vorzugsweise wird die Aufnehmeranordnung 1 mit dem Kraftverankerungsflansch 22 derart in der noch nicht ausgehärteten Einbettmasse 5 positioniert, dass der Kraftverankerungsflansch 22 im unteren Raum 50 vollständig von Einbettmasse 5 umgeben ist. Vorzugsweise ist die Verankerung 220 vollständig von Einbettmasse 5 umgeben. Vorzugsweise reicht die Einbettmasse 5 bis zum Übergangsbereich zwischen Rohrteil 21 und Kraftverankerungsflansch 22. Vorzugsweise umgibt die Einbettmasse 5 ein unteres Ende 41, 41' des Trennelements 4, 4', 4". Die Einbettmasse 5 geht beim Aushärten mit dem unteren Ende 41, 41' des Trennelements 4, 4', 4" eine stoffschlüssige Verbindung ein. Vorzugsweise wird die Aufnehmeranordnung 1 derart in der Nut 60 positioniert, dass ein oberes Ende 42, 42' des Trennelements 4, 4', 4" in der Fahrbahnebene E liegt. Vorzugsweise wird die Aufnehmeranordnung 1 in dieser Position durch Aushärten der den Kraftverankerungsflansch 22 umgebenden Einbettmasse 5 in der Nut 60 verankert. Die Einbettmasse 5 geht beim Aushärten mit dem Kraftverankerungsflansch 22 eine stoffschlüssige Verbindung ein.

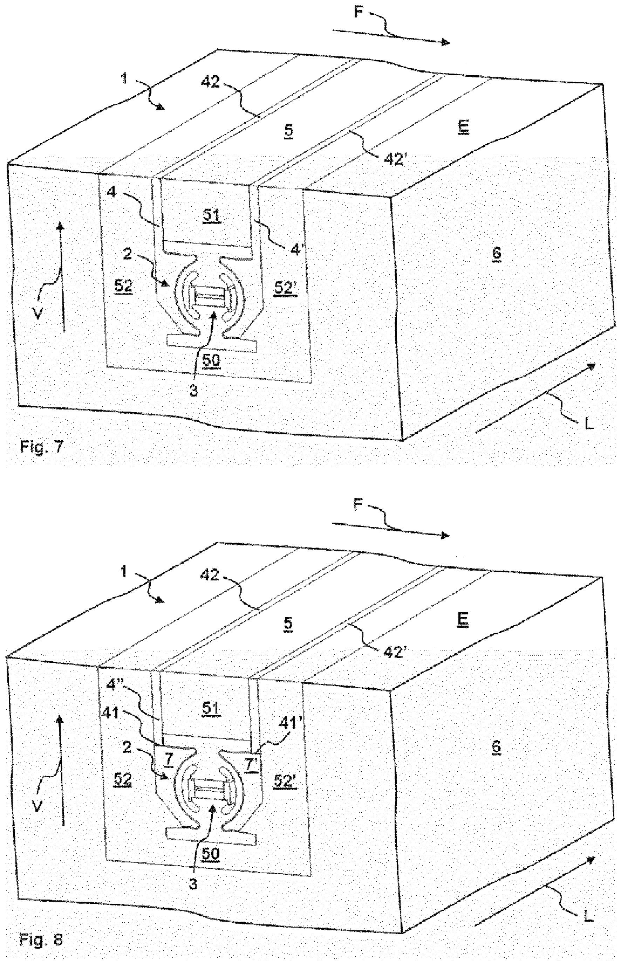

In noch einem weiteren Verfahrensschritt zum Einbau der Aufnehmeranordnung 1 wird die Nut 60, in welcher die Aufnehmeranordnung 1 positioniert ist, vollständig mit Einbettmasse 5 gefüllt. Fig. 7 zeigt die erste Ausführungsform einer Aufnehmeranordnung 1 aus Fig. 5 in der vollständig mit Einbettmasse 5 gefüllten Nut 60. Fig. 8 zeigt die zweite Ausführungsform einer Aufnehmeranordnung 1 aus Fig. 6 in der vollständig mit Einbettmasse 5 gefüllten Nut 60. In Vertikalrichtung V gesehen, füllt die Einbettmasse 5 den oberen Raum 51 vollständig aus. In und entgegen der Fahrrichtung F gesehen, füllt die Einbettmasse 5 den Seitenraum 52, 52' vollständig aus. Der obere Raum 51 kommuniziert über die Verteilöffnung 40, 40' im Trennmittel 4, 4', 4" mit dem Seitenraum 52, 52'. Mittels der Verteilöffnung 40, 40' verteilt sich die Einbettmasse 5 beim Einfüllen in die Nut 60 im oberen Raum 51 und im Seitenraum 52, 52'. Die Einbettmasse 5 geht beim Aushärten mit der Krafteinleitfläche 200 eine stoffschlüssige Verbindung ein. Die Einbettmasse 5 geht beim Aushärten mit dem Trennelement 4, 4', 4" eine stoffschlüssige Verbindung ein. Die in der Verteilöffnung 40, 40' ausgehärtete Einbettmasse 5 verbindet die im oberen Raum 51 ausgehärtete Einbettmasse 5 mit der im Seitenraum 52, 52' ausgehärteten Einbettmasse 5 einstückig.

Die erste Ausführungsform einer Aufnehmeranordnung 1 nach Fig. 7 weist zwei Trennelemente 4, 4' auf. Ein erstes Trennelement 4 ist in Fahrtrichtung F gesehen vor dem Hohlprofil 2 angeordnet. Ein zweites Trennelement 4' ist in Fahrtrichtung F gesehen, nach dem Hohlprofil 2 angeordnet. In und entgegen der Fahrrichtung F gesehen, befindet sich ein erster Seitenraum 52 zwischen einer ersten Seitenfläche 601 und dem ersten Trennelement 4 und ein zweiter Seitenraum 52' befindet sich zwischen einer zweiten Seitenfläche 601' und dem zweiten Trennelement 4'.

Die zweite Ausführungsform einer Aufnehmeranordnung 1 nach Fig. 8 weist ein Trennelement 4" mit zwei Bereichen auf. Ein Bereich vom Trennelement 4" mit dem ersten unteren Ende 41 ist in Fahrtrichtung F gesehen vor dem Hohlprofil 2 angeordnet. Ein Bereich vom Trennelement 4" mit dem zweiten unteren Ende 41' ist in Fahrtrichtung F gesehen, nach dem Hohlprofil 2 angeordnet. In und entgegen der Fahrrichtung F gesehen, befindet sich ein erster Seitenraum 52 zwischen einer ersten Seitenfläche 601 und dem Bereich vom Trennelement 4" mit dem ersten unteren Ende 41 und ein zweiter Seitenraum 52' befindet sich zwischen einer zweiten Seitenfläche 601' und dem Bereich vom Trennelement 4" mit dem zweiten unteren Ende 41'.

Jedes Trennelement 4, 4', 4" weist mehrere Verteilöffnungen 40, 40' auf. Der obere Raum 51 kommuniziert über Verteilöffnungen 40, 40' im Trennmittel 4, 4', 4" mit den beiden Seitenräumen 52, 52'. Auf diese Weise verteilt sich Einbettmasse 5 rasch und einfach im Raum für Einbettmasse 5 um die Aufnehmeranordnung 1 herum.

Das Trennelement 4, 4', 4" weist obere Enden 42, 42' auf, welche nach dem Positionieren der Aufnehmeranordnung 1 in der Nut 30 in der Fahrbahnebene E liegen. Beim Vorhandensein von Spurrillen in der Fahrbahnebene E lassen sich die oberen Enden 42, 42' aufgrund ihrer hohen Elastizität mechanisch derart verformen, dass sie weder unterhalb der Fahrbahnebene E noch oberhalb der Fahrbahnebene E liegen, sondern dass sie genau in der Fahrbahnebene E liegen. Vorzugsweise wird Einbettmasse 5 derart im oberen Raum 51 und im Seitenraum 52, 52' verteilt, dass das erste obere Ende 42 und das zweite obere Ende 42' parallel zueinander in der Fahrbahnebene E liegen bleiben. Vorzugsweise werden die oberen Enden 42, 42' beim Verteilen der Einbettmasse 5 im oberen Raum 51 und im Seitenraum 52, 52' mit geeignetem Werkzeug wie mit eine Klammer in paralleler Lage zueinander gehalten. Auf diese Weise wird sichergestellt, dass gerade im Bereich nahe der Fahrbahnebene E, wo starke Rollkräfte wirken, die Enden 42, 42' auch nach dem Eingiessen mit Einbettmasse 5 bis zur Fahrbahnebene E reichen und ein Einleiten von Rollkräften in das Hohlprofil 2 wirksam verhindern.

### Bezugszeichenliste

- E: Fahrbahnebene
- F: Fahrrichtung
- L: Längsrichtung
- Q: Querrichtung
- V: Vertikalrichtung
- 1: Aufnehmeranordnung
- 2: Hohlprofil
- 3: piezoelektrische Messanordnung
- 4, 4', 4": Trennelement
- 5: Einbettmasse
- 6: Belag
- 7, 7': Isolierschaumteil
- 20: Krafteinleitflansch
- 21: Rohrteil
- 22: Kraftverankerungsflansch
- 40, 40': Verteilöffnung
- 41, 41': unteres Ende vom Trennelement
- 42, 42': oberes Ende vom Trennelement
- 43: Abstandselement
- 60: Nut
- 200: Krafteinleitfläche
- 210: Befestigungsfläche
- 220: Verankerung
- 50: unterer Raum
- 51: oberer Raum
- 52, 52': Seitenraum
- 600: Grund der Nut
- 601, 601': Seitenfläche der Nut

## Patentansprüche

1. Aufnehmeranordnung (1) zum Einbau in eine Fahrbahn; wobei die Aufnehmeranordnung (1) ein Hohlprofil (2) und eine piezoelektrische Messanordnung (3) aufweist; wobei das Hohlprofil (2) einen Hohlraum aufweist und die piezoelektrische Messanordnung (3) im mechanischen Kontakt mit dem Hohlprofil (2) im Hohlraum angeordnet ist; wobei das Hohlprofil (2) eine aussenseitige Krafteinleitfläche (200) aufweist und das Hohlprofil (2) eine Gewichtskraft, welche an der Krafteinleitfläche (200) angreift, auf die piezoelektrische Messanordnung (3) leitet; und wobei die piezoelektrische Messanordnung (3) eine eingeleitete Gewichtskraft erfasst und einer Grösse der erfassten Gewichtskraft proportionale elektrische Signale abgibt; **dadurch gekennzeichnet, dass** die Aufnehmeranordnung (1) ein Trennelement (4, 4', 4") aufweist, welches Trennelement (4, 4', 4") eine Rollkraft, welche Rollkraft am Trennelement (4, 4', 4") angreift, nicht in das Hohlprofil (2) leitet; und dass das Trennelement (4, 4', 4") mindestens eine Verteilöffnung (40, 40') aufweist, durch welche Verteilöffnung (40, 40') Einbettmasse (5) fliessen kann.

2. Aufnehmeranordnung (1) nach Anspruch 1, **dadurch gekennzeichnet, dass** das Trennelement (4, 4', 4") einen geringen Kompressionsmodul und einen niedrigen Elastizitätsmodul aufweist, und dass es Rollkräfte, welche sich in einer zur Vertikalebene senkrechten Querrichtung (Q) ausbreiten, nicht in das Hohlprofil (2) leitet.

3. Aufnehmeranordnung (1) nach einem der Ansprüche 1 oder 2, **dadurch gekennzeichnet, dass** das Trennelement (4, 4', 4") mindestens ein unteres Ende (41, 41') aufweist, welches untere Ende (41, 41') das Trennelement (4, 4', 4") in der Vertikalebene begrenzt; dass das Trennelement (4, 4', 4") mindestens ein oberes Ende (42, 42') aufweist, welches obere Ende (42, 42') das Trennelement (4, 4', 4") in der Vertikalebene begrenzt; dass die Verteilöffnung (40, 40') zwischen dem unteren Ende (41, 41') und dem oberen Ende (42, 42') angeordnet ist; und dass die Verteilöffnung (40, 40') nahe der Krafteinleitfläche (200) angeordnet ist.

4. Aufnehmeranordnung (1) nach einem der Ansprüche 1 bis 3, **dadurch gekennzeichnet, dass** das Hohlprofil (2) mindestens eine aussenseitige Befestigungsfläche (210, 210') aufweist; dass ein erstes Trennelement (4) an einer ersten Befestigungsfläche (210) befestigt ist; dass ein zweites Trennelement (4') an einer zweiten Befestigungsfläche (210') befestigt ist; dass das erste Trennelement (4) in die Fahrbahn in Fahrtrichtung gesehen vor dem Hohlprofil (2) angeordnet einbaubar ist; und dass das zweite Trennelement (4') in die Fahrbahn in Fahrtrichtung gesehen nach dem Hohlprofil (2) angeordnet einbaubar ist.

5. Aufnehmeranordnung (1) nach Anspruch 4, **dadurch gekennzeichnet, dass** das Trennelement (4, 4') aussenseitig auf die Befestigungsfläche (210, 210') gesteckt ist.

6. Aufnehmeranordnung (1) nach einem der Ansprüche 4 oder 5, **dadurch gekennzeichnet, dass** das Trennelement (4") ein unteres Ende (41") aufweist, welches untere Ende (41") das Trennelement (4") in der Vertikalebene begrenzt und mit welchem unteren Ende (41") das Trennelement (4") auf der Krafteinleitfläche (200) angeordnet ist.

7. Aufnehmeranordnung (1) nach einem der Ansprüche 1 bis 3, **dadurch gekennzeichnet, dass** das Trennelement (4") mindestens ein unteres Ende (41, 41') aufweist, welches untere Ende (41, 41') das Trennelement (4") in der Vertikalebene begrenzt; dass das Trennelement (4") mit einem ersten unteren Ende (41) am Krafteinleitungsflansch (200) in Fahrtrichtung gesehen vor dem Hohlprofil (2) befestigt ist; und dass das Trennelement (4") mit einem zweiten unteren Ende (41') am Krafteinleitungsflansch (200) in Fahrtrichtung gesehen nach dem Hohlprofil (2) befestigt ist.

8. Aufnehmeranordnung (1) nach Anspruch 7, **dadurch gekennzeichnet, dass** das Trennelement (4") aussenseitig auf den Krafteinleitungsflansch (200) gesteckt ist.

9. Aufnehmeranordnung (1) nach einem der Ansprüche 7 oder 8, **dadurch gekennzeichnet, dass** das Hohlprofil (2) mindestens eine aussenseitige Befestigungsfläche (210, 210') aufweist; dass ein erstes Isolierschaumteil (7) an einer ersten Befestigungsfläche (210) in Fahrtrichtung gesehen vor dem Hohlprofil (2) befestigt ist; dass ein zweites Isolierschaumteil (7') an einer zweiten Befestigungsfläche (210') in Fahrtrichtung gesehen nach dem Hohlprofil (2) befestigt ist; dass das Trennelement (4") mit dem ersten unteren Ende (41) an das erste Isolierschaumteil (7) grenzt; und dass das Trennelement (4") mit dem zweiten unteren Ende (41') an das zweite Isolierschaumteil (7') grenzt.

10. Verfahren zum Einbau einer Aufnehmeranordnung (1) in eine Fahrbahn; wobei die Aufnehmeranordnung (1) ein Hohlprofil (2) und eine piezoelektrische Messanordnung (3) aufweist; wobei das Hohlprofil (2) einen Hohlraum aufweist und die piezoelektrische Messanordnung (3) im mechanischen Kontakt mit dem Hohlprofil (2) im Hohlraum angeordnet ist; wobei das Hohlprofil (2) eine aussenseitige Krafteinleitfläche (200) aufweist und das Hohlprofil (2) eine Gewichtskraft, welche an der Krafteinleitfläche (200) angreift, auf die piezoelektrische Messanordnung (3) leitet; wobei die piezoelektrische Messanordnung (3) eine eingeleitete Gewichtskraft erfasst und einer Grösse der erfassten Gewichtskraft proportionale elektrische Signale abgibt; wobei in einem Belag (6) der Fahrbahn eine Nut (60) angelegt wird, die so gross bemessen ist, dass die Aufnehmeranordnung (1) darin vollständig Platz hat und um die Aufnehmeranordnung (1) Raum für Einbettmasse (5) ist; wobei die Aufnehmeranordnung (1) in der Nut (60) gelegt wird; und wobei Einbettmasse (5) in den Raum für Einbettmasse (5) gegossen wird; **dadurch gekennzeichnet, dass** die Aufnehmeranordnung (1) ein Trennelement (4, 4', 4") aufweist, welches Trennelement (4, 4', 4") eine Rollkraft, welche Rollkraft am Trennelement (4, 4', 4") angreift, nicht in das Hohlprofil (2) leitet, und welches Trennelement (4, 4', 4") mindestens eine Verteilöffnung (40, 40') aufweist; und dass Einbettmasse (5) durch die Verteilöffnung (40, 40') fliesst und sich im Raum für Einbettmasse (5) verteilt.

11. Verfahren nach Anspruch 10, **dadurch gekennzeichnet, dass** die leere Nut (60) teilweise mit Einbettmasse (5) gefüllt wird; dass die Aufnehmeranordnung (1) in die teilweise mit Einbettmasse (5) gefüllten Nut (60) gelegt wird; und dass die Aufnehmeranordnung (1) einen Kraftverankerungsflansch (22) aufweist, welche Aufnehmeranordnung (1) derart in der Einbettmasse (5) positioniert wird, dass der Kraftverankerungsflansch (22) von Einbettmasse (5) umgeben ist.

12. Verfahren nach einem der Ansprüche 10 oder 11, **dadurch gekennzeichnet, dass** das Trennelement (4, 4', 4") ein oberes Ende (42, 42', 42") aufweist, welches obere Ende (42, 42', 42") das Trennelement (4, 4', 4") in einer Vertikalebene begrenzt und welche Aufnehmeranordnung (1) derart in der Nut (60) positioniert wird, dass das obere Ende (42, 42', 42") in der Fahrbahnebene (E) liegt; und dass das die Aufnehmeranordnung (1) in dieser Position durch Aushärten der den Kraftverankerungsflansch (22) umgebenden Einbettmasse (5) in der Nut (60) verankert wird.

13. Verfahren nach einem der Ansprüche 10 bis 12, **dadurch gekennzeichnet, dass** der Raum für Einbettmasse (5) einen oberen Raum (50) zwischen der Krafteinleitfläche (200) und der Fahrbahnebene (E) und mindestens einen Seitenraum (52, 52') zwischen dem Trennelement (4, 4', 4") und einer Seitenfläche (601, 601') der Nut (60) umfasst; und dass die Nut (60) vollständig mit Einbettmasse 5 gefüllt wird, derart dass die Einbettmasse (5) den oberen Raum (51) vollständig ausfüllt und dass die Einbettmasse (5) den Seitenraum (52, 52') vollständig ausfüllt.

14. Verfahren nach Anspruch 13 **dadurch gekennzeichnet, dass** die Einbettmasse (5) mittels der Verteilöffnung (40, 40') beim Einfüllen in die Nut (60) im oberen Raum (51) und im Seitenraum (52, 52') verteilt wird.

15. Aufnehmeranordnung (1), welche mit dem Verfahren nach einem der Ansprüche 13 oder 14 in eine Fahrbahn eingebaut ist, **dadurch gekennzeichnet, dass** im oberen Raum (51) ausgehärtete Einbettmasse (5) mit der Krafteinleitfläche (200) stoffschlüssig verbunden ist; und dass in der Verteilöffnung (40, 40') ausgehärtete Einbettmasse (5) die im oberen Raum (51) ausgehärtete Einbettmasse (5) mit der im Seitenraum (52, 52') ausgehärtete Einbettmasse (5) einstückig verbindet.

## Claims

1. A sensor arrangement (1) for installation in a carriageway; wherein the sensor arrangement (1) comprises a hollow profile (2) and a piezoelectric measuring arrangement (3); said hollow profile (2) comprising a cavity and said piezoelectric measuring arrangement (3) being arranged in the cavity in mechanical contact with the hollow profile (2); wherein the hollow profile (2) comprises an external force introduction surface (200) and the hollow profile (2) transmits a weight force acting on the force introduction surface (200) onto the piezoelectric measuring arrangement (3); and wherein the piezoelectric measuring arrangement (3) detects an introduced weight force and outputs electrical signals that are proportional to a magnitude of the detected weight force; **characterized in that** the sensor arrangement (1) comprises a separating element (4, 4', 4"), which separating element (4, 4', 4") prevents a rolling force acting on the separating element (4, 4', 4") from being transmitted into the hollow profile (2); and the separating element (4, 4', 4") comprises at least one distribution opening (40, 40') wherein grout (5) can flow through said distribution opening (40, 40').

2. The sensor arrangement (1) according to claim 1, **characterized in that** the separating element (4, 4', 4") has a low bulk modulus and a low elastic modulus and it prevents rolling forces propagating in a transverse direction (Q) perpendicular to the vertical plane from being transmitted to the hollow profile (2).

3. The sensor arrangement (1) according to any of claims 1 or 2, **characterized in that** the separating element (4, 4', 4") comprises at least one lower end (41, 41'), which lower end (41, 41') delimits the separating element (4, 4', 4") in the vertical plane; the separating element (4, 4', 4") comprises at least one upper end (42, 42'), which upper end (42, 42') delimits the separating element (4, 4', 4") in the vertical plane; the distribution opening (40, 40') is arranged between said lower end (41, 41') and said upper end (42, 42'); and the distribution opening (40, 40') is arranged close to the force introduction surface (200).

4. The sensor arrangement (1) according to any of claims 1 to 3, **characterized in that** the hollow profile (2) comprises at least one external attachment surface (210, 210'); a first separating element (4) is attached to a first attachment surface (210); a second separating element (4') is attached to a second attachment surface (210'); the first separating element (4) can be installed in the carriageway in front of the hollow profile (2) as seen in the direction of travel; and the second separating element (4') can be installed in the carriageway behind the hollow profile (2) as seen in the direction of travel.

5. The sensor arrangement (1) according to claim 4, **characterized in that** the separating element (4, 4') is mounted outwardly on the attachment surface (210, 210').

6. The sensor arrangement (1) according to any of claims 4 or 5, **characterized in that** the separating element (4") comprises a lower end (41"), which lower end (41") delimits the separating element (4") in the vertical plane; the separating element (4") being arranged on the force introduction surface (200) by said lower end (41").

7. The sensor arrangement (1) according to any of claims 1 to 3, **characterized in that** the separating element (4") comprises at least one lower end (41, 41'), which lower end (41, 41') delimits the separating element (4") in the vertical plane; the separating element (4") is attached by a first lower end (41) to the force introduction flange (200) in front of the hollow profile (2) as seen in the direction of travel; and the separating element (4") is attached by a second lower end (41') to the force introduction flange (200) behind the hollow profile (2) as seen in the direction of travel.

8. The sensor arrangement (1) according to claim 7, **characterized in that** the separating element (4") is mounted outwardly on the force introduction flange (200).

9. The sensor arrangement (1) according to any of claims 7 or 8, **characterized in that** the hollow profile (2) comprises at least one external attachment surface (210, 210'); a first insulating foam part (7) being attached to a first attachment surface (210) in front of the hollow profile (2) as seen in the direction of travel; a second insulating foam part (7') being attached to a second attachment surface (210') behind the hollow profile (2) as seen in the direction of travel; wherein the separating element (4") abuts on the first insulating foam part (7) with its first lower end (41); and the separating element (4") abuts on the second insulating foam part (7') with its second lower end (41').

10. A process for installing a sensor arrangement (1) in a carriageway; wherein the sensor arrangement (1) comprises a hollow profile (2) and a piezoelectric measuring arrangement (3); said hollow profile (2) comprising a cavity and said piezoelectric measuring arrangement (3) being arranged in said cavity in mechanical contact with the hollow profile (2); wherein the hollow profile (2) comprises an external force introduction surface (200) and the hollow profile (2) transmits a weight force acting on said force introduction surface (200) onto the piezoelectric measuring arrangement (3); wherein the piezoelectric measuring arrangement (3) detects an introduced weight force and outputs electrical signals that are proportional to a magnitude of the detected weight force; wherein a groove (60) is formed in a pavement (6) of the carriageway having such dimensions that it can completely accommodate the sensor arrangement (1) therein and space for grout (5) is provided around the sensor arrangement (1); wherein the sensor arrangement (1) is inserted in the groove (60); and wherein grout (5) is cast in the space provided for grout (5); **characterized in that** the sensor arrangement (1) comprises a separating element (4, 4', 4"), which separating element (4, 4', 4") prevents a rolling force acting on the separating element (4, 4', 4") from being transmitted into the hollow profile (2), and which separating element (4, 4', 4") comprises at least one distribution opening (40, 40'); and wherein grout (5) flows through said distribution opening (40, 40') and is distributed in the space provided for grout (5).

11. The process according to claim 10, **characterized in that** the empty groove (60) is partially filled with grout (5); the sensor arrangement (1) is inserted in the groove (60) partially filled with grout (5); and the sensor arrangement (1) comprises a force anchoring flange (22), wherein the sensor arrangement (1) is positioned in the grout (5) so that the force anchoring flange (22) is surrounded by grout (5) .

12. The process according to any of claims 10 or 11, **characterized in that** the separating element (4, 4', 4") comprises an upper end (42, 42', 42"), which upper end (42, 42', 42'') delimits the separating element (4, 4', 4") in a vertical plane and which sensor arrangement (1) is positioned in the groove (60) so that the upper end (42, 42', 42") is flush with the carriageway surface level (E) ; and the sensor arrangement (1) is anchored in this position in the groove (60) by the curing of the grout (5) that surrounds the force anchoring flange (22).

13. The process according to any of claims 10 to 12, **characterized in that** the space provided for grout (5) comprises an upper space (50) located between the force introduction surface (200) and the carriageway surface level (E) and at least one lateral space (52, 52') located between the separating element (4, 4', 4") and a lateral surface (601, 601') of the groove (60); and the groove (60) is completely filled with grout 5 so that the upper space (51) is completely filled with grout (5) and the lateral space (52, 52') is completely filled with grout (5).

14. The process according to claim 13, **characterized in that** the grout (5) when it is introduced into the groove (60) is distributed by means of the distribution opening (40, 40') in the upper space (51) and in the lateral space (52, 52').

15. A sensor arrangement (1) installed in a carriageway by using the process according to any of claims 13 or 14, **characterized in that** cured grout (5) is material-bonded to the force introduction surface (200) in the upper space (51); and cured grout (5) in the distribution opening (40, 40') integrally connects cured grout (5) in the upper space (51) to cured grout (5) in the lateral space (52, 52').

## Revendications

1. Agencement de capteur (1) destiné à être installé dans une chaussée; dans lequel l'agencement de capteur (1) comprend un profil creux (2) et un agencement de mesure piézoélectrique (3); ledit profil creux (2) comprenant une cavité et ledit agencement de mesure piézoélectrique (3) étant agencé dans ladite cavité en contact mécanique avec ledit profil creux (2); dans lequel le profil creux (2) comprend une surface d'introduction de force (200) externe et le profil creux (2) transmet au dispositif de mesure piézoélectrique (3) une force de poids s'appliquant sur ladite surface d'introduction de force (200); et dans lequel le dispositif de mesure piézoélectrique (3) détecte une force de poids appliquée et fournit des signaux électriques proportionnels à une grandeur de la force de poids détectée; **caractérisé en ce que** l'agencement de capteur (1) comprend un élément de séparation (4, 4', 4"), dans lequel ledit élément de séparation (4, 4', 4") n'introduit pas dans le profil creux (2) une force de roulement s'appliquant sur l'élément de séparation; et **en ce que** l'élément de séparation (4, 4', 4") comprend au moins une ouverture de distribution (40, 40'), à travers ladite ouverture de distribution (40, 40') la masse de scellement (5) pouvant s'écouler.

2. Agencement de capteur (1) selon la revendication 1, **caractérisé en ce que** l'élément de séparation (4, 4', 4") présente un module de compression faible et un module élastique faible et **en ce qu'**il n'introduit pas dans le profil creux (2) les forces de roulement se propageant dans une direction transversale (Q) perpendiculaire au plan vertical.

3. Agencement de capteur (1) selon l'une quelconque des revendications 1 ou 2, **caractérisé en ce que** l'élément de séparation (4, 4', 4") comprend au moins une extrémité inférieure (41, 41'), laquelle extrémité inférieure (41, 41") délimitant l'élément de séparation (4, 4', 4") dans le plan vertical; l'élément de séparation (4, 4', 4") comprend au moins une extrémité supérieure (42, 42'), laquelle extrémité supérieure (42, 42') délimitant l'élément de séparation (4, 4', 4") dans le plan vertical; **en ce que** l'ouverture de distribution (40, 40') est disposée entre ladite extrémité inférieure (41, 41') et ladite extrémité supérieure (42, 42"); et **en ce que** l'ouverture de distribution (40, 40') est disposée à proximité de la surface d'introduction de force (200).

4. Agencement de capteur (1) selon l'une quelconque des revendications 1 à 3, **caractérisé en ce que** le profil creux (2) comprend au moins une surface de fixation (210, 210') externe; **en ce qu'**un premier élément de séparation (4) est fixé à une première surface de fixation (210); un seconde élément de séparation (4') est fixé à une seconde surface de fixation (210'); **en ce que** le premier élément de séparation (4) peut être installé dans la voie de circulation devant le profil creux (2) vu dans le sens de la marche; et **en ce que** le seconde élément de séparation (4') peut être installé dans la voie de circulation derrière le profil creux (2) vu dans le sens de la marche.

5. Agencement de capteur (1) selon la revendication 4, **caractérisé en ce que** l'élément de séparation (4, 4') est placé extérieurement sur la surface de fixation (210, 210').

6. Agencement de capteur (1) selon l'une quelconque des revendications 4 ou 5, **caractérisé en ce que** l'élément de séparation (4") comprend une extrémité inférieure (41"), dans lequel ladite extrémité inférieure (41") délimite l'élément de séparation (4") dans le plan vertical et dans lequel l'élément de séparation (4") est disposé sur la surface d'introduction de force (200) par ladite extrémité inférieure (41").

7. Agencement de capteur (1) selon l'une quelconque des revendications 1 à 3, **caractérisé en ce que** l'élément de séparation (4") comprend au moins une extrémité inférieure (41, 41"), dans lequel ladite extrémité inférieure (41, 41") délimite l'élément de séparation (4") dans le plan vertical; **en ce que** l'élément de séparation (4") est fixé à la bride d'introduction de force (200) par une première extrémité inférieure (41) en avant du profil creux (2) vu dans le sens de la marche; et **en ce que** l'élément de séparation (4") est fixé à la bride d'introduction de force (200) par une seconde extrémité inférieure (41') derrière le profil creux (2) vu dans le sens de la marche.

8. Agencement de capteur (1) selon la revendication 7, **caractérisé en ce que** l'élément de séparation (4") est monté extérieurement sur la bride d'introduction de force (200) .

9. Agencement de capteur (1) selon l'une quelconque des revendications 7 ou 8, **caractérisé en ce que** le profil creux (2) comprend au moins une surface de fixation (210, 210') externe; **en ce qu'**un première élément en mousse isolante (7) étant fixé à une première surface de fixation (210) devant le profil creux (2) vu dans le sens de marche; **en ce qu'**un seconde élément en mousse isolante (7') étant fixé à une seconde surface de fixation (210') derrière le profil creux (2) vu dans le sens de la marche; **en ce qu'**avec sa première extrémité inférieure (41) l'élément de séparation (4") vient en appui sur le première élément en mousse isolante (7); et **en ce qu'**avec sa seconde extrémité inférieure (41') l'élément de séparation (4") vient en appui sur la seconde élément en mousse isolante (7').

10. Procédé pour l'installation d'un agencement de capteur (1) dans une chaussée; dans lequel l'agencement de capteur (1) comprend un profil creux (2) et un agencement de mesure piézoélectrique (3); ledit profil creux (2) comprenant une cavité et ledit agencement de mesure piézoélectrique (3) étant agencé dans ladite cavité en contact mécanique avec le profil creux (2); dans lequel le profil creux (2) comprend une surface d'introduction de force (200) externe et le profil creux (2) transmet à l'agencement de mesure piézoélectrique (3) une force de poids s'appliquant sur ladite surface d'introduction de force (200); dans lequel le dispositif de mesure piézoélectrique (3) détecte une force de poids appliquée et fournit des signaux électriques proportionnels à une grandeur de la force de poids détectée; dans lequel dans un revêtement (6) de la chaussée une rainure (60) est formée avec des dimensions telles qu'elle permet l'introduction de l'agencement de capteur (1) dans son intégralité et telles qu'il y a d'espace pour la masse de scellement (5) autour de l'agencement de capteur (1); dans lequel l'agencement de capteur (1) est inséré dans la rainure (60); et dans lequel la masse de scellement (5) est coulée dans l'espace prévu pour la masse de scellement (5); **caractérisé en ce que** l'agencement de capteur (1) comprend un élément de séparation (4, 4', 4"), dans lequel l'élément de séparation (4, 4', 4") n'introduit pas dans le profil creux (2) une force de roulement s'appliquant sur l'élément de séparation (4, 4', 4"), et dans lequel l'élément de séparation (4, 4', 4") comprend au moins une ouverture de distribution (40, 40'); et **en ce que** la masse de scellement (5) s'écoule à travers ladite ouverture de distribution (40, 40') et se répand dans l'espace prévu pour la masse de scellement (5).

11. Procédé selon la revendication 10, **caractérisé en ce que** la rainure (60) vide est partiellement remplie de masse de scellement (5); **en ce que** l'agencement de capteur (1) est inséré dans la rainure (60) partiellement remplie de masse de scellement (5); et **en ce que** l'agencement de capteur (1) comprend une bride d'ancrage de force (22), ledit agencement de capteur (1) étant positionné dans la masse de scellement (5) de sorte que la bride d'ancrage de force (22) est entourée de la masse de scellement (5).

12. Procédé selon l'une quelconque des revendications 10 ou 11, **caractérisé en ce que** l'élément de séparation (4, 4', 4") comprend une extrémité supérieure (42, 42', 42"), laquelle extrémité supérieure (42, 42', 42") délimitant l'élément de séparation (4, 4', 4") dans un plan vertical, et dans lequel l'agencement de capteur (1) est positionné dans la rainure (60) de sorte que l'extrémité supérieure (42, 42', 42") se situe dans le plan horizontal de la chaussée (E); et **en ce que**, dû au durcissement de la masse de scellement (5) entourant la bride d'ancrage de force (22), l'agencement de capteur (1) est ancré dans la rainure (60) dans cette position.

13. Procédé selon l'une quelconque des revendications 10 à 12, **caractérisé en ce que** l'espace prévu pour la masse de scellement (5) comprend un espace supérieur (50), situé entre la surface d'introduction de force (200) et le plan horizontal de la chaussée (E), et au moins un espace latéral (52, 52'), situé entre l'élément de séparation (4, 4', 4") et une surface latérale (601, 601') de la rainure (60); et **en ce que** la rainure (60) est complètement remplie de masse de scellement 5 de sorte que la masse de scellement (5) remplit complètement ledit espace supérieur (51) et la masse de scellement (5) remplit complètement ledit espace latéral (52, 52').

14. Procédé selon la revendication 13, **caractérisé en ce que** lors de l'introduction dans la rainure (60) la masse de scellement (5) est répartie au moyen de l'ouverture de distribution (40, 40') dans l'espace supérieur (51) et dans l'espace latéral (52, 52').

15. Agencement de capteur (1) installé dans une chaussée en utilisant le procédé selon l'une quelconque des revendications 13 ou 14, **caractérisé en ce que** de la masse de scellement (5) durcie dans l'espace supérieur (51) est reliée par adhérence de matériau à la surface d'introduction de force (200); et **en ce que** de la masse de scellement (5) durcie dans l'ouverture de distribution (40, 40') relie intégralement la masse de scellement (5) durcie dans l'espace supérieur (51) à la masse de scellement (5) durcie dans l'espace latéral (52, 52').
